# EUROPÄISCHE PATENTSCHRIFT

(11) **EP 2 008 940 B1**
(45) Veröffentlichungstag und Bekanntmachung des Hinweises auf die Patenterteilung: **05.11.2014**
(21) Anmeldenummer: 08011458.0
(22) Anmeldetag: 24.06.2008
(51) Int. Cl.: B65D 25/52, B65D 83/06, G01F 11/26, A47G 19/34

(54) **Dosierflasche**
Dosage bottle
Flacon de dosage

(30) Priorität: 26.06.2007 DE 202007008903 U
(43) Veröffentlichungstag der Anmeldung: 31.12.2008
(73) Patentinhaber: Werner & Mertz GmbH, D-55120 Mainz (DE)
(72) Erfinder: Schneider, Reinhard Kai, 55129 Mainz (DE)
(74) Vertreter: Klingseisen, Franz

(56) Entgegenhaltungen:
- EP-A1- 1 041 368
- US-A- 1 498 491
- US-A- 2 233 996
- US-A- 2 426 119
- US-A- 2 794 580
- US-A- 3 980 210

## Beschreibung

Die Erfindung betrifft eine Dosierflasche, für Schüttgut wie Granulat oder körniges Material.

Es ist bekannt, bei einer Flasche beispielsweise eine becherförmige Kappe als Verschluss vorzusehen, die nach dem Abschrauben als Dosiergefäß in der Weise verwendet wird, dass aus der Flasche das darin enthaltene Material in die becherförmige Kappe eingefüllt und von dieser dann in einen anderen Behälter geschüttet wird, in dem das betreffende Material benötigt wird. Bei dieser Art der Dosierung ist ein Umschütten zwischen Flasche und Dosiergefäß erforderlich, wobei das zu dosierende Material beim Umschütten von der Flasche in den Dosierbecher frei zugänglich ist und auch verschüttet werden kann.

Aus US-A-1 498 491 ist ein Zuckerbehälter mit zylindrischer Querschnittsform und einem Henkel bekannt, dessen Boden schräg zur Rückwand hin nach unten zu einer Dosieröffnung verläuft, die an der Rückwand des Behälters ausgebildet ist und in einen Dosierbereich mündet, von dem aus längs des schräg angeordneten Bodens ein Ausgießkanal verläuft, der sich zur Vorderseite des Behälters und längs dieser bis zum oberen Ende erstreckt und durch eine verschwenkbare Klappe in der Standstellung abgedeckt ist, die sich beim Kippen des Behälters öffnet. Der Fußteil ist durch einen Hohlraum des Zuckerbehälters ausgebildet.

EP 1 041 368 A1 beschreibt eine Dosierflasche für Fixdosierungen von Flüssigkeiten, wobei in dem flach gestalteten Flaschenkörper eine Grifföffnung ausgebildet ist, durch die ein Grillbügel am Flaschenkörper gebildet wird. Unterhalb des Flaschenkörpers ist als Fußteil über eine Quetschnaht eine Dosierkammer angeformt, die an der Rückwand der Dosierflasche über eine Durchgangsöffnung mit dem Flascheninnenraum verbunden ist. Von der Vorderseite der Dosierkammer aus erstreckt sich schlauchartig ein Ausgießkanal längs der Vorderseite des Flaschenkörpers, dessen erweitertes Ausgießende über die Flaschenoberseite vorsteht. Neben dem mit einer Kappe verschlossenen Ausgießende des Ausgießkanals ist eine Einfüllöffnung mit einem Verschlussdeckel zum Befüllen der Dosierflasche vorgesehen. Der Querschnitt der Durchgangsöffnung zwischen Flascheninnenraum und Dosierkammer ist größer ausgelegt als der Querschnitt des Ausgießkanals.

US-A-2 233 996 beschreibt einen ähnlichen Aufbau einer Dosierflasche. Bei einer aus US-A-2 426 119 bekannten Bauform ist eine Dosierkammer mit Ausgießkanal auf einen Flaschenkörper aufschraubbar, worauf nach Umdrehen der Flasche deren Inhalt über den Ausgießkanal dosiert abgegeben werden kann.

Aufgabe der Erfindung ist es, eine Vorratsflasche für körniges Material so auszugestalten, dass für eine dosierte Abgabe des körnigen Materials kein zusätzliches Dosiergefäß erforderlich ist.

Diese Aufgabe wird erfindungsgemäß durch die Merkmale des Anspruchs 1 gelöst. Dadurch, dass unterhalb einer Vorratskammer oder einer Vorratsflasche eine Dosierkammer angeordnet ist, die mit der Vorratsflasche über eine Dosieröffnung oder einen Dosierkanal mit vorgegebenem Querschnitt verbunden ist, kann durch Schwerkraftwirkung, gegebenenfalls unterstützt durch Schütteln der Flasche, die Dosierkammer mit dem körnigen Material gefüllt und dieses dann aus der Dosierkammer ausgegossen werden, wobei durch die verengte Dosieröffnung ein unkontrolliertes Nachfließen von körnigem Material in die Dosierkammer verhindert wird. Die gewünschte Dosiermenge wird mit einem einzigen Kippvorgang der Vorratsflasche erreicht.

Auf diese Weise kann mittels der Vorratsflasche eine Dosierung vorgenommen werden, ohne dass dazu ein zusätzliches Dosiergefäß bzw. ein Umschütten des zu dosierenden Materials erforderlich ist.

Die Erfindung wird beispielsweise anhand der Zeichnung näher erläutert. Es zeigen
- Fig. 1: eine praktische Ausführungsform einer solchen Dosierflasche in einer Seitenansicht,
- Fig. 2: eine Ansicht der Dosierflasche von links in Fig. 1,
- Fig. 3: eine Ansicht von rechts in Fig. 1,
- Fig. 4: eine Draufsicht auf die Dosierflasche nach Fig. 1, und
- Fig. 5: eine perspektivische Ansicht der Dosierflasche nach den Fig. 1 bis 4.

Mit 1 ist in den Figuren ein Vorratsbehälter bezeichnet, unter dem eine Dosierkammer 2 angeordnet ist, die über eine Dosieröffnung 3 mit dem Vorratsbehälter 1 verbunden ist. Mit 4 ist ein Ausgießkanal bezeichnet.

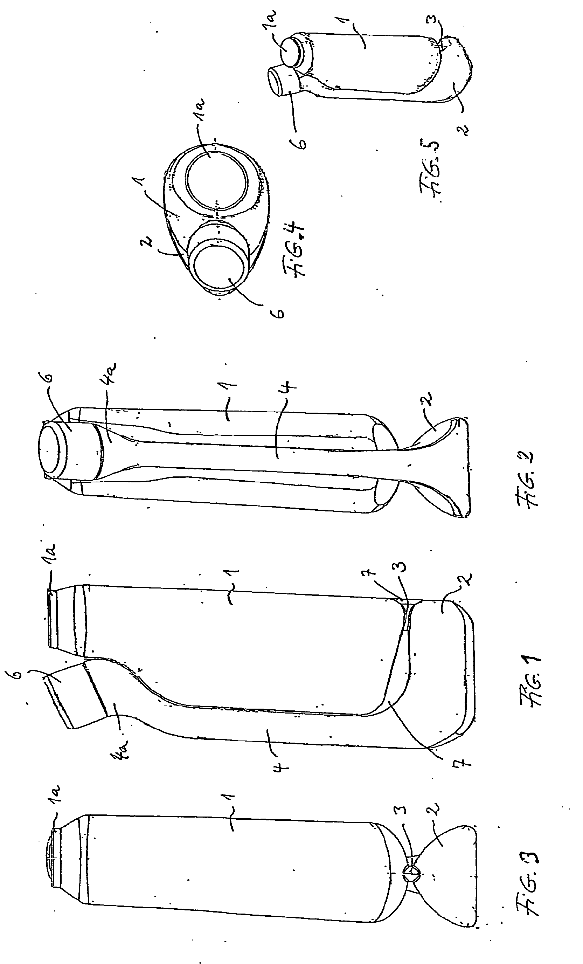

Die Dosieröffnung 3, die auch als Verbindungskanal zwischen Vorratsbehälter 1 und Dosierkammer 2 ausgebildet sein kann, hat einen vorgegebenen Querschnitt, der auf die Korngröße des im Vorratsbehälter 1 enthaltenen Schüttguts 5 abgestimmt ist. Der Querschnitt der Dosieröffnung 3 wird vorzugsweise so ausgelegt, dass das körnige Material 5 aus dem Vorratsbehälter 1 nach und nach in die Dosierkammer 2 einströmen kann, beim Leeren der Dosierkammer aber das körnige Material nicht schnell nachfließen kann. Hierdurch kann der Inhalt der Dosierkammer 2 über den Ausgießkanal 4 schnell entleert werden, ohne dass die durch das Volumen der Dosierkammer vorgegebene Dosierung durch nachfließendes Material beeinträchtigt würde. Auch in Abhängigkeit vom Kippwinkel der Dosierflasche wird das Nachströmen des körnigen Materials in die Dosierkammer verhindert. Z. B. kann insbesondere bei der Bauform nach den Fig. 1 bis 5 bei einem Kippwinkel ab etwa 45° ein Nachströmen verhindert werden, weil die Dosieröffnung 3 an der Rückwand angeordnet ist.

Der Ausgießkanal 4 erstreckt sich vorzugsweise vom Boden der Dosierkammer 2 nach oben über die Höhe der Dosieröffnung 3. Hierbei ist es nicht erforderlich, dass die Austrittsöffnung des Ausgießkanals 4 auf der Höhe des oberen Endes des Vorratsbehälters 1 liegt, weil das in der Dosierkammer 2 befindliche körnige Material ein Nachfließen des im Vorratsbehälter enthaltenen körnigen Materials so behindert, dass das körnige Material aus der Dosierkammer 2 im Ausgießkanal 4 nicht nach oben steigt. Hierdurch besteht keine Gefahr, dass das in der Dosierkammer befindliche körnige Material aus dem Ausgießkanal 4 austritt, auch wenn die Ausgießöffnung unterhalb des Niveaus von körnigem Material im Vorratsbehälter 1 liegt und der Ausgießkanal 4 nicht verschlossen ist.

Der Querschnitt des Ausgießkanals 4 wird größer gewählt als der Querschnitt der Dosieröffnung 3, um ein Ausgießen des Inhalts der Dosierkammer 2 zu erleichtern.

Fig. 1 zeigt eine praktische Ausführungsform einer Dosierflasche. Der Vorratsbehälter 1 ist mit einer Einfüllöffnung an der Oberseite versehen, die durch eine Kappe 1 a vorzugsweise fest verschlossen ist, um ein unbeabsichtigtes Öffnen zu verhindern. Es ist aber auch möglich, eine abschraubbare Kappe 1a vorzusehen, damit der Vorratsbehälter 1 auch wiederbefüllt werden kann. In diesem Fall wird bevorzugt eine mit einer Sicherung gegen unbeabsichtigtes Öffnen versehene Kappe vorgesehen.

Bei der Ausführungsform nach Fig. 1 bis 5 erstreckt sich die Dosierkammer 2, die einen Fußteil der Dosierflasche bildet, im Wesentlichen über den Querschnitt des Vorratsbehälters 1, wobei der Ausgießkanal 4 sich schlauchförmig auf der Vorderseite des Vorratsbehälters 1 nach oben erstreckt und in einem erweiterten Ausgießbereich 4a endet, der durch eine abschraubbare Kappe 6 verschlossen ist.

Der Vorratsbehälter 1 ist zylindrisch und ist im Durchmesser so gestaltet, dass er als Griffteil der Dosierflasche dient, wobei die in Richtung auf die Mitte des Vorratsbehälters versetzte Anordnung der Ausgießöffnung am oberen Ende des Vorratsbehälters 1 den Eindruck vermittelt, als würde man das körnige Material aus dem Vorratsbehälter 1 ausgießen. Hierzu ist am oberen Ende des zylinderförmigen Vorratsbehälters 1 eine Einbuchtung ausgebildet, in die hinein sich das gekröpfte Ende des Ausgießkanals 4 erstreckt, sodass die Ausgießöffnung selbst in den Bereich des zylindrischen Vorratsbehälters 1 zu liegen kommt. Die Rückseite des Vorratsbehälters 1 ist in der Ansicht der Fig. 1 gerade ausgebildet.

Nach dem Entleeren der Dosierkammer 2 fließt durch die Handhabung der Dosierflasche körniges Material aus dem Vorratsbehälter 1 in die Dosierkammer 2, die sich im Wesentlichen nur bis zur Oberkante der Dosierkammer 2 füllt, ohne dass das körnige Material in den Ausgießkanal 4 aufsteigt, weil das Nachfließen von körnigem Material aus dem Vorratsbehälter 1 durch das Material in der Dosierkammer 2 an der verengten Dosieröffnung 3 blockiert wird, das die Dosieröffnung 3 im Wesentlichen "verstopft", solange die Dosierkammer 2 nicht geleert ist.

Bei der dargestellten Ausführungsform ist die Dosieröffnung bzw. ein kurzer Dosierkanal 3 auf der dem Ausgießkanal 4 gegenüberliegenden Rückseite des Vorratsbehälters 1 etwa in Verlängerung der Rückwand ausgebildet, wobei sich der Boden des Vorratsbehälters 1 schräg zur Dosieröffnung 3 hin neigt. In entsprechender Weise ist die Dosieröffnung 3 am rückwärtigen Ende der Dosierkammer 2 positioniert. In Verbindung mit dem auf der Vorderseite der Dosierkammer 2 angesetzten Ausgießkanal 4 werden Toträume zwischen Vorratsbehälter 1 und Ausgießkanal 4 vermieden.

Die Querschnittsform der Dosierkammer 2 in der Rückansicht nach Fig. 3 ist etwa in der Form eines gleichschenkeligen Dreiecks ausgebildet, wobei die Dosieröffnung 3 im Bereich der oberen Spitze des Dreiecks liegt und sich die Dosierkammer 2 von der Dosieröffnung 3 aus nach unten erweitert.

Bei der Ausführungsform nach Fig. 1 bis 5 ist die Querschnittsform des Vorratsbehälters 1 und der Dosierkammer 2 etwa eiförmig gestaltet, wie Fig. 4 zeigt, wobei sich die Verbindungs- bzw. Dosieröffnung 3 im breiten Endabschnitt des Querschnitts in der Ansicht der Fig. 4 befindet und der Ausgießkanal 4 gegenüberliegend an der schmalen Seite so angesetzt ist, dass er eine Verlängerung der Dosierkammer 2 nach oben bildet. Mit anderen Worten entspricht der Querschnitt der Dosierkammer 2 mit Ausgießkanal 4 dem gesamten Querschnitt der Dosierflasche, wie er in der Draufsicht in Fig. 4 wiedergegeben ist, während der Querschnitt des Vorratsbehälters 1 nur dem Teil dieses Gesamtquerschnitts ohne Ausgießkanal entspricht.

Der Übergang zwischen Dosierkammer 2 und Ausgießkanal 4 ist etwa trichterförmig gestaltet, um das Entleeren der Dosierkammer 2 zu erleichtern.

Am oberen Ende ist der verbreiterte bzw. erweiterte Endabschnitt 4a zur Rückseite hin gekröpft bzw. versetzt ausgebildet, wobei der Vorratsbehälter am oberen Ende im Querschnitt etwas verengt ausgebildet ist, sodass sich der gekröpfte Endabschnitt 4a des Ausgießkanals 4 in diese Vertiefung erstrecken kann. Hierdurch liegt die Verschlusskappe 6 in der Draufsicht in Fig. 4 innerhalb des eiförmigen Gesamtquerschnitts der Dosierflasche. Die Kappe 1a des Vorratsbehälters 1 ist dabei angrenzend an die Rückwand positioniert.

Wie Fig. 1 zeigt, ist der Ausgießkanal 4 und die Dosierkammer 2 über einen Steg 7 mit dem Vorratsbehälter 1 verbunden, sodass sich ein stabiler Aufbau der Dosierflasche ergibt.

## Patentansprüche

1. Dosierflasche für Schüttgut wie Granulat oder körniges Material, umfassend einen **im Querschnitt zylindrischen** Vorratsbehälter (1),
**dessen oberes Ende im Querschnitt verengt und mit einer durch eine Kappe (1a) verschlossenen Einfüllöffnung versehen ist, wobei auf der Vorderseite eine Einbuchtung am Vorratsbehälter (1) ausgebildet ist, während die gegenüberliegende Rückseite des Vorratsbehälters gerade verläuft, und**
**wobei der Boden des Vorratsbehälters (1) schräg zur Standfläche von der Vorderseite aus nach unten zu einer Dosieröffnung (3) geneigt ist,** die in Verlängerung der Rückwand des Vorratsbehälters (1) positioniert ist und im Bereich der Rückwand in eine Dosierkammer (2) mündet,
**die** unter **dem Boden des** Vorratsbehälters (1) **als Fußteil der Dosierflasche ausgebildet ist, und** mit dem Vorratsbehälter über die Dosieröffnung oder einen Dosierkanal (3) mit vorgegebenem Querschnitt verbunden ist,
**wobei die Dosierkammer (2)** mit einem Ausgießkanal (4) verbunden ist,
der sich **schlauchartig längs der Vorderseite** des Vorratsbehälters (1) bis zur Höhe des oberen Endes des Vorratsbehälters (1) erstreckt,
**an einem verbreiterten Endabschnitt (4a) gekröpft ausgebildet ist und mit dem gekröpften Endabschnitt in die Einbuchtung des Vorratsbehälters ragt, sodass die Ausgießöffnung des Ausgießkanals (4) im Bereich des zylindrischen Vorratsbehälters liegt und in Richtung auf die Mitte des Vorratsbehälters versetzt ist, und**
wobei der der Ausgießkanal (4) einen größeren Querschnitt hat als die Dosieröffnung (3).

2. Dosierflasche nach Anspruch 1, wobei die Dosierkammer (2) trichterförmig in den Ausgießkanal (4) übergeht.

3. Dosierflasche nach einem der vorhergehenden Ansprüche, wobei die Dosierkammer (2) einen etwa dreieckförmigen Querschnitt mit oben liegender Spitze hat.

## Claims

1. Dosage bottle for bulk materials like granules or granular material, comprising
a reservoir (1) which has a cylindrical cross-section,
the upper end of which has a narrowed cross-section and is provided with a fill port closed by a cap (1a), wherein a recess is formed on the front side of the reservoir (1), while the opposite rear side of the reservoir extends straight, and wherein the bottom of the reservoir (1) is tilted in relation to the standing surface starting from the front side downwards to a dosage opening (3), which is positioned in extension of the rear wall of the reservoir (1) and opens out in the area of the rear wall into a dosage chamber (2),
which is formed below the bottom of the reservoir (1) as a foot portion of the dosage bottle, and is connected to the reservoir via the dosage opening or via a dosage passage (3) having a pre-determined cross-section,
wherein the dosage chamber (2) is connected to a discharge channel (4),
which extends in a tube-like manner along the front side of the reservoir (1) up to the height of the upper end of the reservoir (1),
is formed in an angulate manner at a widened end portion (4a) and projects into the recess of the reservoir by means of its angulate end portion, so that the discharge opening of the discharge channel (4) lies in the area of the cylindrical reservoir and is offset in a direction towards the middle of the reservoir, and
wherein the discharge channel (4) has a larger cross-section than the dosage opening (3).

2. Dosage bottle according to claim 1, wherein the dosing chamber (2) merges in a funnel-shaped manner into the discharge channel (4)

3. Dosage bottle according to one of the preceding claims, wherein the dosing chamber (2) has an approximately triangularly-shaped cross-section having a tip at the upper end thereof

## Revendications

1. Flacon de dosage pour produit en vrac tel que des granulés ou du matériau granulaire, comprenant
un réservoir (1) présentant une section transversale cylindrique,
dont l'extrémité supérieure se rétrécit en section transversale et qui est pourvue d'un orifice de remplissage fermé par un capuchon (1a), dans lequel une échancrure est réalisée au niveau du réservoir (1) sur la face avant, tandis que le côté arrière opposé du réservoir s'étend de manière rectiligne, et
dans lequel le fond du réservoir (1) est incliné de manière oblique par rapport à la face d'appui en partant vers le bas depuis le côté avant et jsuqu'à un orifice de dosage (3), qui est positionné dans le prolongement de la paroi arrière du réservoir (1) et qui débouche, dans la zone de la paroi arrière, dans une chambre de dosage (2), laquelle chambre de dosage est réalisée sous le fond du réservoir (1) en tant que partie inférieure du flacon de dosage, et qui est reliée au réservoir par l'intermédiaire de l'orifice de dosage ou d'un conduit de dosage (3) présentant une section transversale prédéfinie,
dans lequel la chambre de dosage (2) est reliée à un conduit de déversement (4), lequel conduit de déversement s'étend, à la manière d'un tuyau flexible, le long du côté avant du réservoir (1) jusqu'à la hauteur de l'extrémité supérieure du réservoir (1),
qui est coudé au niveau d'une portion d'extrémité (4a) élargie et qui s'étend, par la section d'extrémité coudée, dans l'échancrure du réservoir de sorte que l'orifice de déversement du conduit de déversement (4) se trouve dans la zone du réservoir cylindrique et est décalé en direction du centre du réservoir, et
dans lequel le conduit de déversement (4) présente une section transversale supérieure à celle de l'orifice de dosage (3).

2. Flacon de dosage selon la revendication 1, dans lequel la chambre de dosage (2) est reliée au conduit de déversement (4) en présentant une forme d'entonnoir

3. Flacon de dosage selon l'une quelconque des revendications précédentes, dans lequel la chambre de dosage (2) présente une section transversale de forme sensiblement triangulaire et pourvue d'une pointe située en haut.
